# EUROPÄISCHE PATENTANMELDUNG

(11) **EP 4 818 021 A1**
(43) Veröffentlichungstag der Anmeldung: **07.10.2026**
(21) Anmeldenummer: 26168466.6
(22) Anmeldetag: 27.03.2026
(51) Int. Cl.: B62M 6/50, B62J 45/411, B62J 45/412

(54) **ALGORITHMUS ZUR ÜBERBRÜCKUNG DER UNTERSTÜTZUNG BEI EINEM PEDELEC MIT FAHRERKADENZ UND GESCHWINDIGKEITSSENSORIK BEI GANGWECHSELN**

(30) Priorität: 31.03.2025 DE 102025112510
(71) Anmelder: Robert Bosch GmbH, 70442 Stuttgart (DE)
(72) Erfinder: Reck, Joseph, 71093 Weil Im Schoenbuch (DE)

(57) **Zusammenfassung**

**Die Erfindung** betrifft Verfahren (100) zum Betrieb eines Antriebssystems (55) eines pedalgetriebenen Fahrzeugs (60), umfassend:
- Ermitteln (101) einer Drehzahl (N_{R}) eines Antriebsrads (61) des pedalgetriebenen Fahrzeugs (60),
- Ermitteln (102) einer Drehzahl (N_{K}) eines Kurbeltriebs (62) des pedalgetriebenen Fahrzeugs (60),
- Ermitteln (103) eines Übersetzungsverhältnisses (i) zwischen dem Kurbeltrieb (62) und dem Antriebsrad (61),
- Ermitteln (104) eines Eingriffsverhältnisses (K) in Abhängigkeit der Drehzahl (N_{R}) des Antriebsrads (61), der Drehzahl (N_{K}) des Kurbeltriebs (62) und dem Übersetzungsverhältnis (i),
- Ermitteln (105) eines Soll-Antriebsdrehmoments (M_{Soll}) in Abhängigkeit des Eingriffsverhältnisses (K), insbesondere durch eine Steuereinheit (50),
- Bereitstellen (106) eines Steuersignals (S), wobei das Steuersignal (S) dazu ausgebildet ist, einen Antrieb (51) des Antriebssystems (55) dazu zu veranlassen, das Soll-Antriebsdrehmoment (M_{Soll}) bereitzustellen,

## Beschreibung

### Stand der Technik

Pedalgetriebene Fahrzeuge, insbesondere Fahrräder bzw. Elektrofahrräder oder Pedelecs, können mit einem Antrieb ausgestattet sein, welcher insbesondere dazu dient, den Fahrer bei dem Vortrieb des pedalgetriebenen Fahrzeugs zu unterstützen.

Wünschenswert ist, dass der Antrieb den Fahrer im Wesentlichen nur dann unterstützt, wenn dieser das pedalgetriebene Fahrzeug aktiv antreibt, sich also ein von dem Fahrer angetriebener Kurbeltrieb des pedalgetriebenen Fahrzeugs im Eingriff bzw. Kraftschluss mit einem Antriebsrad des pedalgetriebenen Fahrzeugs befindet, während der Fahrer pedaliert. Ferner ist es wünschenswert, dass im Falle eines bestehenden Eingriffs eine Unterstützung durch den Antrieb möglichst kontinuierlich verfügbar ist und nicht für den Fahrer unerwartet ausbleibt.

Insbesondere kann es durch einen Fahrer eines pedalgetriebenen Fahrzeugs als störend empfunden werden, wenn der Antrieb aktiv unterstützt, ohne dass der Fahrer das pedalgetriebene Fahrzeug aktiv antreibt, also ein Eingriff zwischen Kurbeltrieb und Antriebsrad besteht. Auch kann es als störend empfunden werden, wenn der Antrieb aufgrund einer Fehldetektion eines fehlenden Eingriffs die Unterstützung aussetzt oder reduziert. Dies betrifft insbesondere ein Aussetzen oder Reduzieren der Unterstützung im Nachgang eines Gangwechsels in einen höheren Gang.

### Offenbarung der Erfindung

Die vorliegende Erfindung betrifft ein Verfahren zum Betrieb eines Antriebssystems eines pedalgetriebenen Fahrzeugs, ein weiteres Verfahren zum Betrieb eines Antriebssystems eines pedalgetriebenen Fahrzeugs, eine Steuereinheit für ein Antriebssystem eines pedalgetriebenen Fahrzeugs, ein Antriebssystem für ein pedalgetriebenes Fahrzeug, ein pedalgetriebenes Fahrzeug, ein Computerprogrammprodukt, ein computerlesbares Medium sowie ein Datenträgersignal.

Weitere Merkmale und Details der Erfindung ergeben sich aus den Unteransprüchen, der Beschreibung und den Zeichnungen. Dabei gelten Merkmale und Details, die im Zusammenhang mit den erfindungsgemäßen Verfahren beschrieben sind, selbstverständlich auch im Zusammenhang mit der erfindungsgemäßen Steuereinheit und/oder dem erfindungsgemäßen Antriebssystem und/oder im Zusammenhang mit dem pedalgetriebenen Fahrzeug und/oder im Zusammenhang mit dem erfindungsgemäßen Computerprogrammprodukt und/oder im Zusammenhang mit dem erfindungsgemäßen computerlesbaren Speichermedium und/oder im Zusammenhang mit dem erfindungsgemäßen Datenträgersignal und jeweils umgekehrt, sodass bezüglich der Offenbarung zu den einzelnen Erfindungsaspekten stets wechselseitig Bezug genommen wird bzw. werden kann.

Die vorgestellte Erfindung dient insbesondere zur Bereitstellung eines verbesserten Betriebs eines pedalgetriebenen Fahrzeugs in Bezug auf eine verbesserte Unterstützung eines Fahrers des pedalgetriebenen Fahrzeugs durch einen Antrieb und/oder einen verbesserten Nutzungskomforts.

Gemäß einem ersten Aspekt betrifft die vorliegende Erfindung ein Verfahren zum Betrieb, insbesondere zur Steuerung und/oder Regelung, eines Antriebssystems eines pedalgetriebenen Fahrzeugs, insbesondere E-Bikes oder Pedelecs, insbesondere durch eine Steuereinheit, das Verfahren umfassend:
- Ermitteln einer Drehzahl eines Antriebsrads des pedalgetriebenen Fahrzeugs, insbesondere durch die Steuereinheit,
- Ermitteln, insbesondere Erfassen, einer Drehzahl eines Kurbeltriebs des pedalgetriebenen Fahrzeugs, insbesondere durch die Steuereinheit,
- Ermitteln, insbesondere Erfassen, eines Übersetzungsverhältnisses zwischen dem Kurbeltrieb und dem Antriebsrad, insbesondere durch die Steuereinheit,
- Ermitteln, insbesondere Berechnen, eines Eingriffsverhältnisses in Abhängigkeit der Drehzahl des Antriebsrads, der Drehzahl des Kurbeltriebs und dem Übersetzungsverhältnis, insbesondere durch die Steuereinheit,
- Ermitteln bzw. Bestimmen eines Soll-Antriebsdrehmoments in Abhängigkeit des Eingriffsverhältnisses, insbesondere durch die Steuereinheit,
- Bereitstellen eines Steuersignals, wobei das Steuersignal dazu ausgebildet ist, einen Antrieb des Antriebssystems dazu zu veranlassen, das Soll-Antriebsdrehmoment bereitzustellen,
- Detektieren einer Änderung des Eingriffsverhältnisses als einen ersten Sprung des Eingriffsverhältnisses, insbesondere durch die Steuereinheit,
- Korrigieren des Eingriffsverhältnisses zu einem korrigierten Eingriffsverhältnis und Ermitteln bzw. Bestimmen des Soll-Antriebsdrehmoments in Abhängigkeit des korrigierten Eingriffsverhältnisses in Reaktion auf eine Detektion des ersten Sprungs des Eingriffsverhältnisses, insbesondere durch die Steuereinheit.

Insbesondere kann das Verfahren ein Übermitteln des Steuersignals an den Antrieb und/oder ein Bereitstellen des angepassten Soll- Antriebsdrehmoments durch den Antrieb umfassen.

Es kann vorzugsweise vorgesehen sein, dass die genannten Verfahrensschritte in der angegebenen Reihenfolge ausgeführt werden. Zusätzlich oder alternativ ist es denkbar, dass zumindest einzelne Verfahrensschritte wiederkehrend, insbesondere in einer Schleife und/oder, zumindest teilweise, simultan ausgeführt werden. Zusätzlich oder alternativ kann das Verfahren als ein computerimplementiertes Verfahren ausgebildet sein.

In anderen Worten wird ein Verfahren zum Betrieb, insbesondere zur Steuerung bzw. Regelung, eines Antriebssystems eines pedalgetriebenen Fahrzeugs vorgeschlagen. Bevorzugt kann das Antriebssystem wenigstens einen Antrieb zur Bereitstellung eines Antriebsdrehmoments zum Vortrieb des pedalgetriebenen Fahrzeugs umfassen, wobei insbesondere der Antrieb als ein Elektromotor ausgebildet ist.

Erfindungsgemäß vorgesehen ist, dass eine Drehzahl eines Antriebsrads des pedalgetriebenen Fahrzeugs ermittelt, insbesondere erfasst, wird. Die Drehzahl des Antriebsrads kann unmittelbar, bspw. im Rahmen einer sensorischen Erfassung ermittelt werden. Alternativ kann die Drehzahl aus einer oder mehreren Größen ermittelt werden, welche indikativ bzw. charakteristisch sind für die Drehzahl des Antriebsrads.

Das Antriebsrad des pedalgetriebenen Fahrzeugs ist bevorzugt ein Hinterrad des pedalgetriebenen Fahrzeugs. Insbesondere können die nachfolgend in Bezug auf die Drehzahl des Antriebsrads beschriebenen Abhängigkeiten auch über einen oder mehrere Parameter abgebildet werden, welche indikativ sind für die Drehzahl des Antriebsrads.

Ein Ermitteln kann insbesondere eine sensorische Erfassung des betreffenden Parameters bzw. der betreffenden Größe umfassen bzw. zum Gegenstand haben. Hierzu kann vorgesehen sein, dass die Steuereinheit wenigstens einen Sensor zur Erfassung des entsprechenden Parameters bzw. der entsprechenden Größe aufweist bzw. umfasst. Auch kann ein Ermitteln umfassen oder darin bestehen, dass wenigstens ein Parameter an die Steuereinheit übermittelt bzw. bei dieser bereitgestellt und/oder von dieser abgefragt wird. Das Abfragen und/oder Übermitteln kann bei bzw. von einer Sensoreinheit des pedalgetriebenen Fahrzeugs oder des Antriebssystems erfolgen. Auch kann ein Ermitteln eine Berechnung einer Größe aus bereits bekannten bzw. in der Steuereinheit vorliegenden Größen umfassen.

Insbesondere kann vorgesehen sein, dass die Drehzahl des Antriebsrads unmittelbar erfasst wird. Alternativ kann vorgesehen sein, dass wenigstens ein Zustandsparameter erfasst wird, der mit der Drehzahl des Antriebsrads korreliert bzw. aus dem die Drehzahl des Antriebsrads abgeleitet werden kann. Dies kann bspw. eine Geschwindigkeit des pedalgetriebenen Fahrzeugs sein. Unter Kenntnis des Durchmessers eines Rads, insbesondere Antriebsrads, kann die Drehzahl des Antriebsrads in Abhängigkeit der Geschwindigkeit ermittelt werden. Weiterhin kann bspw. eine Drehzahl einer rotierenden Komponente einer Nabenschaltung, insbesondere Hinterradnabenschaltung, erfasst werden. Auch kann eine Drehzahl einer Antriebswelle des Antriebs (Antriebsdrehzahl) erfasst werden. So kann unter Kenntnis eines Übersetzungsverhältnisses zwischen Antriebswelle und Antriebsrad die Drehzahl des Antriebsrads ermittelt werden.

Ferner ist vorgesehen, dass eine Drehzahl eines Kurbeltriebs des pedalgetriebenen Fahrzeugs ermittelt, insbesondere erfasst wird. Die Drehzahl des Kurbeltriebs kann unmittelbar, bspw. im Rahmen einer sensorischen Erfassung ermittelt werden. Alternativ kann die Drehzahl aus einer oder mehreren Größen ermittelt werden, welche indikativ bzw. charakteristisch sind für die Drehzahl des Kurbeltriebs.

Insbesondere kann vorgesehen sein, dass die Drehzahl des Kurbeltriebs unmittelbar erfasst wird. Insbesondere können die nachfolgend in Bezug auf die Drehzahl des Kurbeltriebs beschriebenen Abhängigkeiten auch über einen oder mehrere Parameter abgebildet werden, welche indikativ sind für die Drehzahl des Kurbeltriebs.

Ferner ist vorgesehen, dass ein Übersetzungsverhältnis zwischen dem Kurbeltrieb und dem Antriebsrad ermittelt, insbesondere berechnet, wird. Das Übersetzungsverhältnis kann bevorzugt variabel sein, wobei das pedalgetriebene Fahrzeug eine Gangschaltung zur Bereitstellung dieses variablen Übersetzungsverhältnisses umfassen kann. Das Übersetzungsverhältnis kann bspw. von einer Gangschaltung des pedalgetriebenen Fahrzeugs an die Steuereinheit übermittelt werden. Alternativ kann das Übersetzungsverhältnis durch die Steuereinheit bei einer Komponente des pedalgetriebenen Fahrzeugs, insbesondere der Gangschaltung, abgefragt werden.

Zusätzlich oder alternativ kann das Übersetzungsverhältnis in Abhängigkeit wenigstens eines Zustandsparameters des pedalgetriebenen Fahrzeugs ermittelt werden. Insbesondere kann das Übersetzungsverhältnis als Verhältnis aus der Drehzahl des Kurbeltriebs und der Drehzahl des Antriebsrads ermittelt werden. Wurde das Übersetzungsverhältnis ermittelt, kann dieses bevorzugt als konstant angenommen werden, bis eine Aktualisierung des Übersetzungsverhältnisses ausgelöst wird. So kann eine ständige Änderung des Übersetzungsverhältnisses vermieden werden, wenn der Fahrer seine Trittfrequenz ändert oder aufhört zu pedalieren und das Übersetzungsverhältnis kann zur Berechnung weiterer Größen, wie bspw. dem Eingriffsverhältnis, herangezogen werden.

Ferner ist vorgesehen, dass in Abhängigkeit der Drehzahl des Antriebsrads, der Drehzahl des Kurbeltriebs und des Übersetzungsverhältnisses ein Eingriffsverhältnis ermittelt, insbesondere berechnet, wird. Das Eingriffsverhältnis ist insbesondere dafür indikativ, ob sich der Kurbeltrieb und das Antriebsrad aktuell im Eingriff bzw. Kraftschluss befindet. Das Eingriffsverhältnis *K* kann bevorzugt gemäß der folgenden Vorschrift ermittelt werden, wobei i das Übersetzungsverhältnis, *N_{K}* die Drehzahl des Kurbeltriebs und *N_{R}* die Drehzahl des Antriebsrads ist: $K = \frac{i ⋅ {N}_{K}}{{N}_{R}}$

Insbesondere kann das Ermitteln des Eingriffsverhältnisses zeitlich wiederkehrend, bevorzugt in äquidistanten Zeitabständen, oder kontinuierlich bzw. quasi kontinuierlich über der Zeit erfolgen.

Ferner ist vorgesehen, dass ein Soll-Antriebsdrehmoment in Abhängigkeit des Eingriffsverhältnisses ermittelt bzw. bestimmt wird und ein Steuersignal bereitgestellt wird, wobei das Steuersignal dazu ausgebildet ist, einen Antrieb des Antriebssystems dazu zu veranlassen, das Soll-Antriebsdrehmoment bereitzustellen. Zum Ermitteln bzw. Bestimmen des Soll-Antriebsdrehmoments kann insbesondere ein funktionaler Zusammenhang zwischen dem Eingriffsverhältnis und dem Soll-Antriebsdrehmoment, wie eine Kennlinie oder dergleichen verwendet werden. Ein solcher funktionaler Zusammenhang kann, bspw. in Form einer Kennlinie, Tabelle oder dergleichen, auf der, insbesondere in einem Datenspeicher der Steuereinheit, hinterlegt sein. Das Bereitstellen des Steuersignals kann bevorzugt wiederkehrend erfolgen, sodass Änderungen im Eingriffsverhältnis entsprechend durch veränderte Steuersignale abgebildet werden.

Bevorzugt kann vorgesehen sein, dass sich das Soll-Antriebsdrehmoment, insbesondere linear, proportional zum Eingriffsverhältnis verhält. Dies bezieht sich insbesondere auf eine Definition des Eingriffsverhältnisses gemäß der obenstehenden Vorschrift.

Ferner ist vorgesehen, dass, wenn eine Änderung, insbesondere eine Reduktion, des Eingriffsverhältnisses als ein erster Sprung des Eingriffsverhältnisses detektiert wird, das Eingriffsverhältnis zu einem korrigierten Eingriffsverhältnis korrigiert wird und das Ermitteln des Soll-Antriebsdrehmoments in Abhängigkeit des korrigierten Eingriffsverhältnisses erfolgt. Somit wird auch ein entsprechend der vorgenommenen Korrektur verändertes Steuersignal bereitgestellt. Die Reduktion des Eingriffsverhältnisses bezieht sich insbesondere auf die obige Vorschrift des Eingriffsverhältnisses.

Im Rahmen der Erfindung wurde erkannt, dass Änderungen des Übersetzungsverhältnisses, insbesondere bei einer eingeschränkten Sensorik des pedalgetriebenen Fahrzeugs, zeitlich verzögert erfasst werden. Dies führt zu einer temporär fehlerhaften Berechnung des Eingriffsverhältnisses und kann zu der Annahme führen, dass kein Eingriff zwischen Kurbeltrieb und Antriebsrad vorliegt, obwohl dieser jedoch besteht. Dies betrifft insbesondere die Situation des Hochschaltens. In diesem Fall verringert sich die Drehzahl am Kurbeltrieb und unter Annahme eines unveränderten Übersetzungsverhältnisses auch das Eingriffsverhältnis. Dies würde aufgrund der Abhängigkeit zwischen Soll-Antriebsdrehmoment und Eingriffsverhältnis zu einer Reduktion der Unterstützung des Fahrers führen, obwohl ein Eingriff zwischen Kurbeltrieb und Antriebsrad besteht. Dieser Effekt kann durch eine Korrektur des Eingriffsverhältnisses bzw. der damit verbundenen Abfrage eines veränderten Soll-Antriebsdrehmoments in Abhängigkeit dieses korrigierten Eingriffsverhältnisses vermieden werden.

Bevorzugt kann ferner vorgesehen sein, dass das Korrigieren des Eingriffsverhältnisses zu dem korrigierten Eingriffsverhältnis derart erfolgt, dass ein in Abhängigkeit des korrigierten Eingriffsverhältnisses bestimmtes Soll-Antriebsdrehmoment größer ist als ein in Abhängigkeit des Eingriffsverhältnisses bestimmtes Soll-Antriebsdrehmoment. In anderen Worten erfolgt die Korrektur dahingehend, dass ein im Vergleich zu dem nicht korrigierten Eingriffsverhältnis höheres Soll-Antriebsdrehmoment bestimmt bzw. ermittelt wird, um die Unterstützung des Fahrers aufrechtzuerhalten.

Zusätzlich oder alternativ ist denkbar, dass das Korrigieren des Eingriffsverhältnisses zu dem korrigierten Eingriffsverhältnis Folgendes umfasst:
- Ermitteln eines ersten Eingriffsverhältniswerts wobei der erste Eingriffsverhältniswert charakteristisch ist für eine quantitative Ausprägung des Eingriffsverhältnisses vor dem ersten Sprung des Eingriffsverhältnisses und
- Ermitteln eines zweiten Eingriffsverhältniswerts, wobei der zweite Eingriffsverhältniswert charakteristisch ist für eine quantitative Ausprägung des Eingriffsverhältnisses nach dem ersten Sprung des Eingriffsverhältnisses,
- Ermitteln eines Korrekturfaktors in Abhängigkeit des ersten Eingriffsverhältniswerts und des zweiten Eingriffsverhältniswerts, insbesondere als Quotient des ersten Eingriffsverhältniswerts und des zweiten Eingriffsverhältniswerts,
- Bestimmen des korrigierten Eingriffsverhältnisses als Produkt aus dem Eingriffsverhältnis und dem Korrekturfaktor.

Somit lässt sich die Berechnung des Korrekturfaktors *F* wie folgt formulieren, wobei *K*₁ der erste Eingriffsverhältniswert und*K*₂ der zweite Eingriffsverhältniswert ist: $F = \frac{{K}_{1}}{{K}_{2}}$

Das korrigierte Eingriffsverhältnis *K** ergibt sich somit zu: $K * = F ⋅ K$

Der erste Eingriffsverhältniswert kann insbesondere ein zeitlicher Mittelwert des Eingriffsverhältnisses in einem vorgegebenen Zeitraum vor dem ersten Sprung sein. Alternativ kann der erste Eingriffsverhältniswert bspw. auch der letzte Wert des Eingriffsverhältnisses vor dem ersten Sprung sein.

Der zweite Eingriffsverhältniswert kann insbesondere ein zeitlicher Mittelwert des Eingriffsverhältnisses in einem vorgegebenen Zeitraum nach dem ersten Sprung sein. Alternativ kann der zweite Eingriffsverhältniswert bspw. auch der erste Wert des Eingriffsverhältnisses nach dem ersten Sprung sein.

Bevorzugt kann ferner vorgesehen sein, dass das Korrigieren des Eingriffsverhältnisses zu dem korrigierten Eingriffsverhältnis Folgendes umfasst:
- Begrenzen des korrigierten Eingriffsverhältnisses auf einen Eingriffsverhältnisgrenzwert und/oder Begrenzen des Korrekturfaktors auf einen Korrekturfaktorgrenzwert.

Durch die Verwendung eines Eingriffsverhältnisgrenzwerts kann sichergestellt werden, dass das korrigierte Eingriffsverhältnis in einem sinnvollen Bereich bleibt. Bspw. kann der Eingriffsverhältnisgrenzwert eins betragen. Ein Eingriffsverhältnis von eins charakterisiert unter Bezugnahme auf die obenstehende Vorschrift zum Eingriffsverhältnis einen vollen Eingriff zwischen Kurbeltrieb und Antriebsrad.

Es kann optional vorgesehen sein, dass das Verfahren ferner Folgendes umfasst:
- Detektieren einer Änderung, insbesondere Steigerung, des Eingriffsverhältnisses als einen zweiten, insbesondere dem ersten Sprung entgegengesetzten, Sprung des Eingriffsverhältnisses,
- Beenden des Korrigierens des Eingriffsverhältnisses in Reaktion auf eine Detektion des zweiten Sprungs des Eingriffsverhältnisses und, insbesondere erneutes, Bestimmen des Soll-Antriebsdrehmoments in Abhängigkeit des, insbesondere unkorrigierten, Eingriffsverhältnisses.

In anderen Worten kann vorgesehen sein, dass das Korrigieren des Eingriffsverhältnisses eingestellt bzw. beendet wird, wenn eine Änderung, insbesondere Steigerung, des Eingriffsverhältnisses als ein zweiter Sprung detektiert wird. Der zweite Sprung stellt insbesondere eine gegenüber dem ersten Sprung entgegengesetzte Änderung des Eingriffsverhältnisses dar. Die Steigerung des Eingriffsverhältnisses bezieht sich insbesondere auf die obige Vorschrift des Eingriffsverhältnisses.

Der zweite Sprung des Eingriffsverhältnisses ist ein Indiz dafür, dass eine Aktualisierung des Übersetzungsverhältnisses erfolgt ist, also ein neues bzw. aktualisiertes Übersetzungsverhältnis ermittelt oder bereitgestellt wurde. Entsprechend erfolgt ab dem zweiten Sprung eine erneut korrekte Berechnung des Eingriffsverhältnisses und der unkorrigierte Wert des Eingriffsverhältnisses kann wieder zum Ermitteln des Soll-Antriebsdrehmoments herangezogen werden.

Bevorzugt kann vorgesehen sein, dass eine Änderung des Eingriffsverhältnisses dann als, insbesondere erster oder zweiter, Sprung detektiert wird, wenn
- eine Änderungsrate des Eingriffsverhältnisses einen vorgegebenen Grenzwert erreicht oder überschreitet,
- eine Differenz zwischen einem ungefilterten und einem gefilterten, insbesondere tiefpassgefilterten, Verlaufs des Eingriffsverhältnisses über der Zeit an wenigstens einem gegebenen Zeitpunkt einen vorgegebenen Grenzwert erreicht oder überschreitet,
- ein vorgegebenes Muster für einen Verlauf des Eingriffsverhältnisses in einem Verlauf des Eingriffsverhältnisses über der Zeit erkannt wird und/oder
- ein Betrag der Änderung des Eingriffsverhältnisses innerhalb eines vorgegebenen Zeitraums einen vorgegebenen Grenzwert erreicht oder überschreitet und/oder
- das Eingriffsverhältnis nach der Änderung innerhalb eines vorgegebenen Wertebereichs liegt.

In anderen Worten wird eine Änderung des Eingriffsverhältnisses dann als Sprung detektiert, wenn eine Änderungsrate des Eingriffsverhältnisses, also eine Änderung des Eingriffsverhältnisses pro Zeiteinheit, einen vorbestimmten Grenzwert erreicht oder überschreitet. Diesbezüglich können für den ersten und zweiten Sprung unterschiedliche Grenzwerte vorgegeben sein. Insbesondere kann ein auf den ersten Sprung bezogener Grenzwert eine negative Änderungsrate sein, also eine Abnahme charakterisieren und ein auf den zweiten Sprung bezogener Grenzwert eine positive Änderungsrate sein, also eine Steigerung charakterisieren oder umgekehrt.

Zusätzlich oder alternativ kann ein ungefiltertes Signal bzw. ein ungefilterter zeitlicher Verlauf des Eingriffsverhältnisses verglichen werden mit einem gefilterten, insbesondere tiefpassgefilterten, Signal bzw. zeitlichen Verlauf des Eingriffsverhältnisses. Durch den Tiefpassfilter können hochfrequente Anteile des Signals entfernt werden. Übersteigt die Differenz der Signale an einem gegebenen Zeitpunkt einen Grenzwert, so deutet dies auf eine entsprechend deutliche Änderung des Eingriffsverhältnisses hin.

Zusätzlich oder alternativ kann ein Muster in einem zeitlichen Verlauf des Eingriffsverhältnisses detektiert werden, um einen Sprung zu erkennen. Für einen ersten Sprung kann dies insbesondere ein Erreichen oder Überschreiten eines ersten Grenzwerts und ein, insbesondere darauffolgendes, Erreichen oder Unterschreiten eines zweiten Grenzwerts durch das Eingriffsverhältnis innerhalb eines vorgegebenen Zeitraums sein, wobei insbesondere der erste Grenzwert größer ist als der zweite. Dies bezieht sich insbesondere auf die oben angegebene Vorschrift zur Berechnung des Eingriffsverhältnisses. Ein solches Muster resultiert aus einer kurzzeitigen Beschleunigung des Kurbeltriebs bei einem Gangwechsel in einen höheren Gang, aufgrund eines damit verbundenen, kurzzeitigen, Freiflugs der Kette bei einer Kettenschaltung.

Zusätzlich oder alternativ kann zur Detektion eines, insbesondere zweiten, Sprungs überprüft werden, ob das Eingriffsverhältnis nach der Änderung, insbesondere für einen vorgegebenen Zeitraum, innerhalb eines vorgegebenen Wertebereichs liegt. Der vorgegebene Wertebereich kann insbesondere Werte des Eingriffsverhältnisses zwischen 0,9 und 1,1 umfassen. Dies bezieht sich insbesondere auf die oben angegebene Vorschrift zur Berechnung des Eingriffsverhältnisses. So kann sichergestellt werden, dass eine Korrektur des Eingriffsverhältnisses nur dann beendet wird, wenn erneut ein Eingriff zwischen Kurbeltrieb und Antriebsrad festgestellt wurde.

Zusätzlich oder alternativ kann vorgesehen sein, dass zumindest das Korrigieren des Eingriffsverhältnisses nur dann erfolgt, wenn
- vor dem Detektieren des ersten Sprungs das Eingriffsverhältnis für eine vorgegebene Zeitdauer innerhalb eines vorgegebenen Wertebereichs lag und/oder
- der Betrag der Änderung des Eingriffsverhältnisses bei dem ersten Sprung einen vorgegebenen Grenzwert erreicht oder überschreitet.

In anderen Worten kann auf eine Korrektur des Eingriffsverhältnisses verzichtet werden, wenn vor dem ersten Sprung das Eingriffsverhältnis für eine vorbestimmte Zeitdauer in einem vorgegebenen Wertebereich lag oder einen vorgegebenen Grenzwert erreicht oder überschritten hat. Der Grenzwert bzw. der Wertebereich kann insbesondere dafür charakteristisch sein, dass innerhalb der vorgegebenen Zeitdauer ein Eingriff zwischen Kurbeltrieb und Antriebsrad bestand bzw. vorlag. Hierdurch kann insbesondere vermieden werden, dass eine Korrektur des Eingriffsverhältnisses erfolgt, obwohl kein Eingriff zwischen Kurbeltrieb und Antriebsrad vorliegt und somit auch keine Unterstützung des Fahrers durch den Antrieb aufrechterhalten werden soll. Bevorzugt kann der vorgegebene Wertebereich bspw. Werte des Eingriffsverhältnisse zwischen 0,9 und 1,1 umfassen. Dies bezieht sich insbesondere auf die oben angegebene Vorschrift zur Berechnung des Eingriffsverhältnisses.

Zusätzlich oder alternativ kann vorgesehen sein, dass eine Änderung des Eingriffsverhältnisses eine vorgegebene quantitative Ausprägung erreichen muss, damit die Änderung als Sprung detektiert wird. Hierdurch kann die Reaktivität des Verfahrens in Bezug auf vergleichsweise kleine Änderungen des Eingriffsverhältnisses reduziert werden.

Ferner kann vorgesehen sein, dass das Korrigieren des Eingriffsverhältnisses beendet wird, wenn
- nach dem Detektieren des ersten Sprungs des Eingriffsverhältnisses das Eingriffsverhältnis für eine vorgegebene Zeitdauer innerhalb wenigstens eines vorgegebenen Wertebereichs liegt.

Bevorzugt kann der vorgegebene Wertebereich bspw. Werte des Eingriffsverhältnisse zwischen 0,9 und 1,1 umfassen. Insbesondere bei vergleichsweise langsamen Anstiegen des Eingriffsverhältnisses nach dem ersten Sprung kann so die Korrektur des Eingriffsverhältnisses beendet werden. Ein Beenden des Korrigierens des Eingriffsverhältnisses umfasst insbesondere, dass in der Folge das Soll-Antriebsdrehmoment wieder in Abhängigkeit des, insbesondere nicht korrigierten, Eingriffsverhältnisses bestimmt wird.

Das Beenden des Korrigierens kann optional sprunghaft erfolgen. Hiermit ist gemeint, dass das Beenden unmittelbar eingestellt wird. Alternativ kann eine Korrektur zunächst beibehalten werden und ein im Zuge der Korrektur ermittelter Korrekturfaktor über einen vorgegebenen Zeitraum derart verändert werden, dass das korrigierte Eingriffsverhältnis am Ende des vorgegebenen Zeitraums dem, insbesondere nicht korrigierten, Eingriffsverhältnis entspricht. Dies kann bspw. über eine, insbesondere lineare, Steigerung bzw. Reduktion (je nach angewendeter Rechenvorschrift) des Korrekturfaktors erreicht werden.

Bevorzugt kann ferner vorgesehen sein, dass durch das Verfahren ferner Folgendes umfasst ist:
- Aktualisieren des Übersetzungsverhältnisses in Reaktion auf eine Detektion des ersten Sprungs des Eingriffsverhältnisses, insbesondere durch die Erfassungseinheit, wobei insbesondere das Korrigieren des Eingriffsverhältnisses beendet wird, wenn das Übersetzungsverhältnis aktualisiert wurde.

In anderen Worten kann das Detektieren des ersten Sprungs als Indikator dafür verwendet werden, dass sich das Übersetzungsverhältnis zwischen Kurbeltrieb und Antriebsrad verändert hat und eine Aktualisierung des Übersetzungsverhältnisses erforderlich ist, um eine korrekte Berechnung des Eingriffsverhältnisses zu gewährleisten. Zum Aktualisieren kann das Übersetzungsverhältnis durch das Antriebssystem, insbesondere die Steuereinheit, erneut bei einer Komponente des pedalgetriebenen Fahrzeugs, insbesondere der Gangschaltung, abgefragt werden. Das Aktualisieren kann insbesondere ein erneutes Erfassen des Übersetzungsverhältnisses sein. Zusätzlich oder alternativ kann das Übersetzungsverhältnis in Abhängigkeit wenigstens eines Zustandsparameters, insbesondere der Drehzahl des Kurbeltriebs und/oder der Drehzahl des Antriebsrads, des pedalgetriebenen Fahrzeugs ermittelt werden.

Insbesondere kann das Aktualisieren des Übersetzungsverhältnisses Folgendes umfasst:
- Ermitteln eines temporären Übersetzungsverhältnisses in Abhängigkeit der Drehzahl des Antriebsrads und der Drehzahl des Kurbeltriebs,
- Festlegen des temporären Übersetzungsverhältnisses als neues Übersetzungsverhältnis, wenn eine Änderungsrate des temporären Übersetzungsverhältnisses für einen vorgegebenen Zeitraum einen vorgegebenen Grenzwert erreicht oder unterschreitet und/oder wenn eine Differenz zwischen einem ungefilterten und einem gefilterten, insbesondere tiefpassgefilterten, Verlaufs des temporären Übersetzungsverhältnisses über der Zeit an wenigstens einem gegebenen Zeitpunkt einen vorgegebenen Grenzwert erreicht oder unterschreitet.

In anderen Worten wird ein temporäres Übersetzungsverhältnis ermittelt, was zunächst nicht den Wert des Übersetzungsverhältnisses ersetzt, welcher bspw. zum Ermitteln des Eingriffsverhältnisses herangezogen wird. Insbesondere wird das temporäre Übersetzungsverhältnis i* als Quotient aus der Drehzahl des Antriebsrads und der Drehzahl des Kurbeltriebs ermittelt. Das temporäre Übersetzungsverhältnis kann insbesondere zeitlich wiederkehrend ermittelt werden, sodass ein Verlauf des temporären Übersetzungsverhältnisses über der Zeit auswertbar ist.

Das temporäre Übersetzungsverhältnis wird insbesondere dann als neues Übersetzungsverhältnis festgelegt, wenn eine Änderungsrate, also eine Änderung des temporären Übersetzungsverhältnisses pro Zeiteinheit, für einen vorgegebenen Zeitraum einen vorgegebenen Grenzwert erreicht oder unterschreitet. Auf diese Weise kann festgestellt werden, dass sich das temporäre Übersetzungsverhältnis in seinem Verlauf über der Zeit ausreichend stabilisiert hat, sodass davon ausgegangen werden kann, dass der ermittelte Wert das tatsächlich vorliegende Übersetzungsverhältnis zutreffend repräsentiert. Insbesondere kann das neue Übersetzungsverhältnis als zeitliches Mittel des temporären Übersetzungsverhältnisses in dem vorgegebenen Zeitraum oder als letzter Wert des temporären Übersetzungsverhältnisses in dem vorgegebenen Zeitraum festgelegt werden.

Gemäß einem zweiten Aspekt betrifft die vorliegende Erfindung ein Verfahren zum Betrieb eines Antriebssystems eines pedalgetriebenen Fahrzeugs, insbesondere E-Bikes oder Pedelecs, insbesondere durch eine Steuereinheit, das Verfahren umfassend:
- Ermitteln einer Drehzahl eines Antriebsrads des pedalgetriebenen Fahrzeugs, insbesondere durch die Steuereinheit,
- Ermitteln einer Drehzahl eines Kurbeltriebs des pedalgetriebenen Fahrzeugs, insbesondere durch die Steuereinheit,
- Detektieren eines fehlenden Eingriffs zwischen dem Kurbeltrieb und dem Antriebsrad in Abhängigkeit der Drehzahl des Kurbeltriebs und der Drehzahl des Antriebsrads, insbesondere durch die Steuereinheit
- Bereitstellen eines Steuersignals zur Anpassung, insbesondere zur Reduktion, eines durch einen Antrieb des Antriebssystems bereitgestellten Antriebsdrehmoments in Reaktion auf eine Detektion des fehlenden Eingriffs, insbesondere durch die Steuereinheit.

Es kann vorzugsweise vorgesehen sein, dass die genannten Verfahrensschritte in der angegebenen Reihenfolge ausgeführt werden. Zusätzlich oder alternativ ist es denkbar, dass zumindest einzelne Verfahrensschritte wiederkehrend, insbesondere in einer Schleife und/oder, zumindest teilweise, simultan ausgeführt werden. Zusätzlich oder alternativ kann das Verfahren als ein computerimplementiertes Verfahren ausgebildet sein.

Insbesondere kann das Verfahren ein Übermitteln des Steuersignals an den Antrieb und/oder ein Anpassen des Antriebsdrehmoments gemäß der Vorgabe des Steuersignals durch den Antrieb umfassen.

In anderen Worten wird ein Verfahren zum Betrieb, insbesondere zur Steuerung bzw. Regelung, eines Antriebssystems eines pedalgetriebenen Fahrzeugs vorgeschlagen. Bevorzugt kann das Antriebssystem wenigstens einen Antrieb zur Bereitstellung eines Antriebsdrehmoments zum Vortrieb des pedalgetriebenen Fahrzeugs umfassen, wobei insbesondere der Antrieb als ein Elektromotor ausgebildet ist.

Erfindungsgemäß vorgesehen ist, dass eine Drehzahl eines Antriebsrads des pedalgetriebenen Fahrzeugs ermittelt, insbesondere erfasst, wird. Die Drehzahl des Antriebsrads kann unmittelbar, bspw. im Rahmen einer sensorischen Erfassung ermittelt werden. Alternativ kann die Drehzahl aus einer oder mehreren Größen ermittelt werden, welche indikativ bzw. charakteristisch sind für die Drehzahl des Antriebsrads.

Das Antriebsrad des pedalgetriebenen Fahrzeugs ist bevorzugt ein Hinterrad des pedalgetriebenen Fahrzeugs. Insbesondere können die nachfolgend in Bezug auf die Drehzahl des Antriebsrads beschriebenen Abhängigkeiten auch über einen oder mehrere Parameter abgebildet werden, welche indikativ sind für die Drehzahl des Antriebsrads.

Ein Ermitteln kann insbesondere eine sensorische Erfassung des betreffenden Parameters bzw. der betreffenden Größe umfassen bzw. zum Gegenstand haben. Hierzu kann vorgesehen sein, dass die Steuereinheit wenigstens einen Sensor zur Erfassung des entsprechenden Parameters bzw. der entsprechenden Größe aufweist bzw. umfasst. Auch kann ein Ermitteln umfassen oder darin bestehen, dass wenigstens ein Parameter an die Steuereinheit übermittelt bzw. bei dieser bereitgestellt und/oder von dieser abgefragt wird. Das Abfragen und/oder Übermitteln kann bei bzw. von einer Sensoreinheit des pedalgetriebenen Fahrzeugs oder des Antriebssystems erfolgen. Auch kann ein Ermitteln eine Berechnung einer Größe aus bereits bekannten bzw. in der Steuereinheit vorliegenden Größen umfassen.

Insbesondere kann vorgesehen sein, dass die Drehzahl des Antriebsrads unmittelbar erfasst wird. Alternativ kann vorgesehen sein, dass wenigstens ein Zustandsparameter erfasst wird, der mit der Drehzahl des Antriebsrads korreliert bzw. aus dem die Drehzahl des Antriebsrads abgeleitet werden kann. Dies kann bspw. eine Geschwindigkeit des pedalgetriebenen Fahrzeugs sein. Unter Kenntnis des Durchmessers eines Rads, insbesondere Antriebsrads, kann die Drehzahl des Antriebsrads in Abhängigkeit der Geschwindigkeit ermittelt werden. Weiterhin kann bspw. eine Drehzahl einer rotierenden Komponente einer Nabenschaltung, insbesondere Hinterradnabenschaltung, erfasst werden. Auch kann eine Drehzahl einer Antriebswelle des Antriebs (Antriebsdrehzahl) erfasst werden. So kann unter Kenntnis eines Übersetzungsverhältnisses zwischen Antriebswelle und Antriebsrad die Drehzahl des Antriebsrads ermittelt werden.

Ferner ist vorgesehen, dass eine Drehzahl eines Kurbeltriebs des pedalgetriebenen Fahrzeugs ermittelt, insbesondere erfasst wird. Die Drehzahl des Kurbeltriebs kann unmittelbar, bspw. im Rahmen einer sensorischen Erfassung ermittelt werden. Alternativ kann die Drehzahl aus einer oder mehreren Größen ermittelt werden, welche indikativ bzw. charakteristisch sind für die Drehzahl des Kurbeltriebs.

Vorgesehen ist ferner, dass ein fehlender Eingriff bzw. Kraftschluss zwischen dem Kurbeltrieb und dem Antriebsrad in Abhängigkeit der Drehzahl des Kurbeltriebs und der Drehzahl des Antriebsrads ermittelt bzw. detektiert wird, und dass ein Steuersignal in Reaktion auf eine Detektion des fehlenden Eingriffs bereitgestellt wird, wobei das Steuersignal dazu ausgebildet ist, ein durch einen Antrieb des Antriebssystems bereitgestelltes Antriebsdrehmoment anzupassen bzw. zu verändern, insbesondere zu reduzieren.

Das erfindungsgemäße Verfahren hat sich als vorteilhaft erwiesen, wenn der Fahrer des pedalgetriebenen Fahrzeugs nahe am Eingriff oder außerhalb eines Eingriffs zwischen Kurbeltrieb und Antriebsrad pedaliert, der Antrieb jedoch trotzdem eine Unterstützung bereitstellt. Dies kann durch den Fahrer als unangenehm empfunden werden, da ein Vortrieb des pedalgetriebenen Fahrzeugs erzeugt wird, ohne dass der Fahrer aktiv dazu beiträgt. Durch eine Detektion des fehlenden Eingriffs und eine geeignete Anpassung des durch den Antrieb bereitgestellten Antriebsdrehmoments, insbesondere eine Reduktion des Antriebsdrehmoments, kann aktiv auf die erneute Herstellung eines Eingriffs zwischen Kurbeltrieb und Antriebsrad hingewirkt werden und ein verbessertes Fahrgefühl für den Fahrer realisiert werden.

Insbesondere kann das Steuersignal dazu ausgebildet sein, ein durch den Antrieb bereitgestelltes Antriebsdrehmoment linear anzupassen, insbesondere linear zu reduzieren.

Insbesondere kann das Verfahren auch Folgendes umfassen bzw. wie folgt aufgebaut sein:
- Ermitteln einer Drehzahl eines Antriebsrads des pedalgetriebenen Fahrzeugs, insbesondere durch die Steuereinheit,
- Ermitteln, insbesondere Erfassen, einer Drehzahl eines Kurbeltriebs des pedalgetriebenen Fahrzeugs, insbesondere durch die Steuereinheit,
- Ermitteln, insbesondere Erfassen, eines Übersetzungsverhältnisses zwischen dem Kurbeltrieb und dem Antriebsrad, insbesondere durch die Steuereinheit,
- Ermitteln, insbesondere Berechnen, eines Eingriffsverhältnisses in Abhängigkeit der Drehzahl des Antriebsrads, der Drehzahl des Kurbeltriebs und dem Übersetzungsverhältnis, insbesondere durch die Steuereinheit,
- Ermitteln bzw. Bestimmen eines Soll-Antriebsdrehmoments in Abhängigkeit des Eingriffsverhältnisses, insbesondere durch die Steuereinheit,
- Bereitstellen eines Steuersignals, wobei das Steuersignal dazu ausgebildet ist, einen Antrieb des Antriebssystems dazu zu veranlassen, das Soll-Antriebsdrehmoment bereitzustellen,
- Detektieren eines fehlenden Eingriffs zwischen dem Kurbeltrieb und dem Antriebsrad in Abhängigkeit Drehzahl des Kurbeltriebs und der Drehzahl des Antriebsrads, insbesondere durch die Steuereinheit,
- Korrigieren des Eingriffsverhältnisses zu einem korrigierten Eingriffsverhältnis und Ermitteln bzw. Bestimmen des Soll-Antriebsdrehmoments in Abhängigkeit des korrigierten Eingriffsverhältnisses in Reaktion auf eine Detektion des fehlenden Eingriffs, insbesondere durch die Steuereinheit, wobei insbesondere das Korrigieren des Eingriffsverhältnisses zu dem korrigierten Eingriffsverhältnis derart erfolgt, dass ein in Abhängigkeit des korrigierten Eingriffsverhältnisses bestimmtes Soll-Antriebsdrehmoment kleiner ist als ein in Abhängigkeit des Eingriffsverhältnisses bestimmtes Soll-Antriebsdrehmoment.

Auf diese Weise kann entsprechend ein Steuersignal bereitgestellt werden, was dazu ausgebildet ist, das durch den Antrieb bereitgestellte Antriebsdrehmoment zu reduzieren, solange ein fehlender Eingriff detektiert wird.

Für das Eingriffsverhältnis gilt bevorzugt die oben angegebene Vorschrift zur Berechnung. Insbesondere kann das Korrigierend des Eingriffsverhältnisses dabei derart erfolgen, dass das in Abhängigkeit des korrigierten Eingriffsverhältnisses bestimmte Soll-Antriebsdrehmoment mit der Zeit, insbesondere linear, reduziert wird. Das Korrigieren des Eingriffsverhältnisses kann bspw. durch eine, insbesondere lineare, Reduktion des zur Berechnung des Eingriffsverhältnisses verwendeten Übersetzungsverhältnisses erfolgen.

Bevorzugt kann vorgesehen sein, dass das Detektieren des fehlenden Eingriffs Folgendes umfasst:
- Ermitteln eines temporären Übersetzungsverhältnisses in Abhängigkeit der Drehzahl des Antriebsrads und der Drehzahl des Kurbeltriebs,
   wobei ein fehlender Eingriff zwischen dem Kurbeltrieb und dem Antriebsrad detektiert wird, wenn
- eine Änderungsrate des temporären Übersetzungsverhältnis einen vorgegebenen Grenzwert für eine vorgegebene Zeitdauer erreicht oder überschreitet und/oder
- eine Differenz zwischen einem ungefilterten und einem gefilterten, insbesondere tiefpassgefilterten, Verlaufs des temporären Übersetzungsverhältnisses über der Zeit an wenigstens einem gegebenen Zeitpunkt einen vorgegebenen Grenzwert erreicht oder unterschreitet.

In anderen Worten kann vorgesehen sein, dass ein temporäres Übersetzungsverhältnis ermittelt wird. Insbesondere wird das temporäre Übersetzungsverhältnis i* als Quotient aus der Drehzahl des Antriebsrads und der Drehzahl des Kurbeltriebs ermittelt. $i * = \frac{{N}_{R}}{{N}_{K}}$

Das temporäre Übersetzungsverhältnis kann insbesondere zeitlich wiederkehrend ermittelt werden, sodass ein Verlauf des temporären Übersetzungsverhältnisses über der Zeit auswertbar ist.

Ein fehlender Eingriff zwischen Antriebsrad und Kurbeltrieb kann bevorzugt dann detektiert werden, wenn eine Änderungsrate des temporären Übersetzungsverhältnisses, also eine Änderung des temporären Übersetzungsverhältnisses pro Zeiteinheit, für einen vorgegebenen Zeitraum einen vorgegebenen Grenzwert erreicht oder überschreitet. Vergleichsweise starke Änderungen des temporären Übersetzungsverhältnisses deuten insbesondere auf eine ungleichmäßige Drehzahl des Kurbeltriebs hin, was wiederum auf einen fehlenden Eingriff bzw. Kraftschluss zwischen Kurbeltrieb und Antriebsrad schließen lässt.

Zusätzlich oder alternativ kann ein ungefiltertes Signal bzw. ein ungefilterter zeitlicher Verlauf des temporären Übersetzungsverhältnisses verglichen werden mit einem gefilterten, insbesondere tiefpassgefilterten, Signal bzw. zeitlichen Verlauf des temporären Übersetzungsverhältnisses. Durch den Tiefpassfilter können hochfrequente Anteile des Signals entfernt werden. Übersteigt die Differenz der Signale an einem gegebenen Zeitpunkt einen Grenzwert, so deutet dies auf eine entsprechend deutliche Änderung des temporären Übersetzungsverhältnisses hin.

Anstelle eines ungefilterten Signals und eines gefilterten Signals können auch zwei gefilterte Signale, insbesondere tiefpassgefilterte Signale, verwendet werden, wobei die zur Filterung angewendeten Grenzfrequenzen unterschiedlich hoch gewählt werden. So erhält man ein schnelles Signal (hohe Grenzfrequenz) und ein langsames Signal (niedrige Grenzfrequenz), die auf die beschriebene Weise verglichen werden können.

Zusätzlich oder alternativ kann ferner vorgesehen sein, dass durch das Verfahren ferner Folgendes umfasst ist:
- Detektieren eines bestehenden Eingriffs zwischen dem Kurbeltrieb und dem Antriebsrad in Abhängigkeit der Drehzahl des Kurbeltriebs und der Drehzahl des Antriebsrads,
- Beenden des Bereitstellens des Steuersignals zur Anpassung, insbesondere Reduktion, des durch den Antrieb des Antriebssystems bereitgestellten Antriebsdrehmoments bzw. Beenden des Korrigierens des Eingriffsverhältnisses in Reaktion auf eine Detektion des bestehenden Eingriffs und Bestimmen des Soll-Antriebsdrehmoments in Abhängigkeit des Eingriffsverhältnisses.

In anderen Worten wird das Anpassen, insbesondere Reduzieren, des Antriebsmoments beendet, wenn ein erneuter Eingriff zwischen Antriebsrad und Kurbeltrieb erkannt wurde.

Insbesondere kann vorgesehen sein, dass das Detektieren des bestehenden Eingriffs Folgendes umfasst:
- Ermitteln eines temporären Übersetzungsverhältnisses in Abhängigkeit der Drehzahl des Antriebsrads und der Drehzahl des Kurbeltriebs, wobei ein bestehender Eingriff zwischen dem Kurbeltrieb und dem Antriebsrad detektiert wird, wenn
- eine Änderungsrate des temporären Übersetzungsverhältnis einen vorgegebenen Grenzwert für eine vorgegebene Zeitdauer erreicht oder unterschreitet und/oder
- eine Differenz zwischen einem ungefilterten und einem gefilterten, insbesondere tiefpassgefilterten, Verlaufs des temporären Übersetzungsverhältnisses über der Zeit an wenigstens einem gegebenen Zeitpunkt einen vorgegebenen Grenzwert erreicht oder unterschreitet.

Wurde ein bestehender Eingriff detektiert, kann das temporäre Übersetzungsverhältnis ferner als neues bzw. aktualisiertes Übersetzungsverhältnis festgelegt und insbesondere zur Berechnung weiterer Größen, bspw. eines Eingriffsverhältnisses, herangezogen werden.

Die in Bezug auf die Verfahren des ersten und zweiten Aspekts beschriebenen Merkmale können beliebig kombiniert bzw. ausgetauscht werden. Insbesondere hat sich auch eine kombinierte Anwendung der Verfahren bei einem pedalgetriebenen Fahrzeug als äußerst vorteilhaft erwiesen.

Gemäß einem dritten Aspekt betrifft die vorliegende Erfindung eine Steuereinheit bzw. Regelungseinheit für ein Antriebssystem eines pedalgetriebenen Fahrzeugs, wobei insbesondere die Steuereinheit bzw. Regelungseinheit dazu ausgebildet ist, das Antriebssystem gemäß einem Verfahren gemäß dem ersten und/oder zweiten Aspekt der vorliegenden Erfindung zu betreiben bzw. dazu ausgebildet ist, ein Verfahren gemäß dem ersten und/oder zweiten Aspekt der vorliegenden Erfindung auszuführen. In Bezug auf eine Steuereinheit ergeben sich somit die gleichen Vorteile, wie sie bereits in Bezug auf die erfindungsgemäßen Verfahren beschrieben wurden. Bevorzugt ist die Steuereinheit dazu ausgebildet, eine Steuerung bzw. Regelung gemäß einem erfindungsgemäßen Verfahren bei dem Antriebssystem durchzuführen.

Insbesondere kann vorgesehen sein, dass die Steuereinheit bzw. Regelungseinheit Mittel zur Datenverarbeitung umfasst. Die Mittel zur Datenverarbeitung können bevorzugt wenigstens einen Prozessor und/oder wenigstens einen Arbeitsspeicher und/oder wenigstens einen, insbesondere nichtflüchtigen, Datenspeicher umfassen.

Gemäß einem vierten Aspekt betrifft die vorliegende Erfindung ein Antriebssystem für ein pedalgetriebenes Fahrzeug, insbesondere für ein E-Bike bzw. Pedelec. Das Antriebssystem umfasst wenigstens einen Antrieb zur Bereitstellung eines Antriebsdrehmoments zum Vortrieb des pedalgetriebenen Fahrzeugs sowie eine Steuereinheit bzw. Regelungseinheit, insbesondere eine Steuereinheit bzw. Regelungseinheit gemäß dem zweiten Aspekt der vorliegenden Erfindung. Bevorzugt ist das Antriebssystem dazu ausgebildet, gemäß einem Verfahren gemäß dem ersten und/oder zweiten Aspekt der vorliegenden Erfindung betrieben zu werden. Entsprechend ergeben sich in Bezug auf das erfindungsgemäße Antriebssystem die gleichen Vorteile, wie sie in Bezug auf die erfindungsgemäßen Verfahren und/oder eine erfindungsgemäße Steuereinheit beschrieben wurden.

Wenigstens ein Antrieb des Antriebssystems kann vorzugsweise als ein Elektromotor ausgebildet sein und/oder in einer Mittelmotoranordnung an dem pedalgetriebenen Fahrzeug positioniert sein. Zusätzlich oder alternativ kann besonders bevorzugt wenigstens ein Antrieb als ein Nabenantrieb bzw. Nabenmotor, insbesondere als ein Hinterradnabenantrieb, ausgebildet sein. Zusätzlich oder alternativ können mehrere, insbesondere gleichartige oder identische, Antriebe durch das pedalgetriebene Fahrzeug umfasst sein. Zusätzlich oder alternativ kann wenigstens ein Antrieb bevorzugt dazu ausgebildet sein, einen Fahrer des pedalgetriebenen Fahrzeugs beim Vortrieb des pedalgetriebenen Fahrzeugs zu unterstützen.

Gemäß einem fünften Aspekt betrifft die vorliegende Erfindung ein pedalgetriebenes Fahrzeug, wobei das pedalgetriebene Fahrzeug ein Antriebssystem gemäß dem vierten Aspekt der vorliegenden Erfindung umfasst. Vorzugsweise kann das pedalgetriebene Fahrzeug als ein Fahrrad, vorzugsweise Elektrofahrrad (E-Bike) bzw. Pedelec, ausgebildet sein. In Bezug auf ein pedalgetriebenes Fahrzeug ergeben sich die gleichen Vorteile, wie sie in Bezug auf die erfindungsgemäßen Verfahren und/oder eine erfindungsgemäße Steuereinheit und/oder ein erfindungsgemäßes Antriebssystem beschrieben wurden. Das pedalgetriebene Fahrzeug kann bevorzugt zwei Räder, insbesondere ein Vorderrad und ein Hinterrad, umfassen.

Bevorzugt kann das pedalgetriebene Fahrzeug eine Gangschaltung zur Bereitstellung eines variablen Übersetzungsverhältnisses in einem Antriebsstrang bzw. zwischen einem Kurbeltrieb und einem Antriebsrad des pedalgetriebenen Fahrzeugs umfassen. Das Übersetzungsverhältnis kann insbesondere charakteristisch sein für die Anzahl der Umdrehungen eines Antriebsrads des pedalgetriebenen Fahrzeugs pro Umdrehung eines Kurbeltriebs des Fahrzeugs. Ein hohes Übersetzungsverhältnis bzw. ein hoher Gang charakterisiert insofern eine vergleichsweise hohe Anzahl an Umdrehungen des Antriebsrads bei einer Umdrehung des Kurbeltriebs. Ein niedriges Übersetzungsverhältnis bzw. ein niedriger Gang charakterisiert hingegen eine vergleichsweise geringe Anzahl an Umdrehungen des Antriebsrads bei einer Umdrehung des Kurbeltriebs.

Das pedalgetriebene Fahrzeug kann bevorzugt einen Kurbeltrieb umfassen. Insbesondere kann durch den Kurbeltrieb ein Fahrerdrehmoment bzw. eine Fahrerleistung zum Vortrieb des Fahrzeugs, insbesondere über Pedale des Kurbeltriebs, durch einen Fahrer einbringbar sein bzw. eingebracht werden. Insbesondere kann der Kurbeltrieb mit wenigstens einem oder genau einem Antriebsrad des pedalgetriebenen Fahrzeugs derart in Wirkverbindung stehen, dass das Antriebsrad durch den Kurbeltrieb antreibbar ist. Eine solche Wirkverbindung kann insbesondere über wenigstens ein Kraftübertragungselement wie eine Kette oder einen Riemen oder dergleichen realisiert sein.

Die Gangschaltung kann vorliegend als eine Kettenschaltung oder eine Nabenschaltung ausgebildet sein. Zusätzlich oder alternativ kann vorgesehen sein, dass die Gangschaltung als eine automatische bzw. zumindest teilautomatisierte Gangschaltung ausgebildet ist. Insbesondere kann vorgesehen sein, dass Schaltvorgänge der Gangschaltung nicht manuell durch einen Fahrer des Fahrzeugs ausgelöst werden müssen, sondern automatisiert auf Grundlage eines oder mehrerer Fahrparameter erfolgt. Ein Fahrparameter kann bspw. eine Geschwindigkeit des pedalgetriebenen Fahrzeugs, eine Trittfrequenz eines Fahrers des pedalgetriebenen Fahrzeugs und/oder ein von einem Fahrer des pedalgetriebenen Fahrzeugs eingebrachtes Fahrerdrehmoment zum Vortrieb des Fahrzeugs bzw. eine von einem Fahrer des pedalgetriebenen Fahrzeugs eingebrachte Leistung zum Vortrieb des Fahrzeugs sein. Die Möglichkeit einer zusätzlich manuellen Auslösung von Schaltvorgängen ist hierdurch nicht ausgeschlossen.

Die Steuereinheit und/oder das Antriebssystem und/oder das pedalgetriebene Fahrzeug kann wenigstens einen Sensor zur Erfassung wenigstens eines Zustandsparameters des pedalgetriebenen Fahrzeugs, insbesondere einer Drehzahl eines Kurbeltriebs und/oder eines Antriebsrads des pedalgetriebenen Fahrzeugs, umfassen.

Ist wenigstens ein Sensor durch das pedalgetriebene Fahrzeug oder das Antriebssystem umfasst, kann die Steuereinheit zumindest temporär in eine, insbesondere bidirektionale, Kommunikationsverbindung mit dem Sensor bringbar sein, insbesondere um durch den Sensor erfasste Größen auszulesen und/oder zu empfangen.

Gemäß einem sechsten Aspekt betrifft die vorliegende Erfindung ein Computerprogrammprodukt, umfassend Befehle, die bewirken, dass eine Steuereinheit gemäß dem zweiten Aspekt der vorliegenden Erfindung und/oder ein Antriebssystem gemäß dem vierten Aspekt der vorliegenden Erfindung ein Verfahren gemäß dem ersten und/oder zweiten Aspekt der vorliegenden Erfindung ausführt. In Bezug auf ein erfindungsgemäßes Computerprogrammprodukt ergeben sich insofern die gleichen Vorteile, wie sie bereits in Bezug auf die erfindungsgemäßen Verfahren und/oder ein erfindungsgemäßes Antriebssystem und/oder ein erfindungsgemäßes pedalgetriebenes Fahrzeug beschrieben wurden.

Gemäß einem siebten Aspekt betrifft die vorliegende Erfindung ein computerlesbares Speichermedium, wobei auf dem computerlesbaren Medium ein Computerprogrammprodukt gemäß dem sechsten Aspekt der vorliegenden Erfindung gespeichert ist. In Bezug auf ein erfindungsgemäßes computerlesbares Speichermedium ergeben sich insofern die gleichen Vorteile, wie sie bereits in Bezug auf die erfindungsgemäßen Verfahren und/oder eine erfindungsgemäße Steuereinheit und/oder ein erfindungsgemäßes Antriebssystem und/oder ein erfindungsgemäßes pedalgetriebenes Fahrzeug und/oder ein erfindungsgemäßes Computerprogrammprodukt beschrieben wurden.

Gemäß einem achten Aspekt betrifft die vorliegende Erfindung ein Datenträgersignal, welches ein Computerprogrammprodukt gemäß dem sechsten Aspekt der vorliegenden Erfindung überträgt. In Bezug auf ein erfindungsgemäßes Datenträgersignal ergeben sich insofern die gleichen Vorteile, wie sie bereits in Bezug auf die erfindungsgemäßen Verfahren und/oder eine erfindungsgemäße Steuereinheit und/oder ein erfindungsgemäßes Antriebssystem und/oder ein erfindungsgemäßes pedalgetriebenes Fahrzeug und/oder ein erfindungsgemäßes Computerprogrammprodukt und/oder ein erfindungsgemäßes computerlesbares Speichermedium beschrieben wurden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein.

Dabei zeigen jeweils schematisch:
- Figur 1: eine Ansicht eines Verfahrens,
- Figur 2: einen Verlauf des Eingriffsverhältnisses über der Zeit,
- Figur 3: eine Ansicht eines Verfahrens,
- Figur 4: eine Steuereinheit für ein Antriebssystem,
- Figur 5: ein Antriebssystem für ein pedalgetriebenes Fahrzeug und
- Figur 6: ein pedalgetriebenes Fahrzeug.

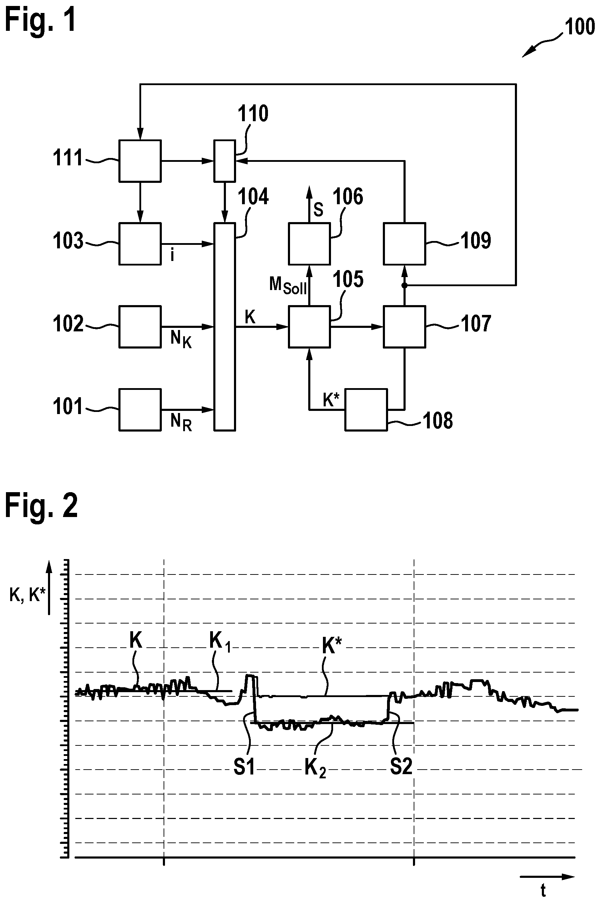

Fig. 1 zeigt eine schematische Ansicht eines Verfahrens 100 zum Betrieb eines Antriebssystems 55, umfassend:
- Ermitteln 101 einer Drehzahl N_{R} eines Antriebsrads 61 des pedalgetriebenen Fahrzeugs 60,
- Ermitteln 102 einer Drehzahl N_{K} eines Kurbeltriebs 62 des pedalgetriebenen Fahrzeugs 60,
- Ermitteln 103 eines Übersetzungsverhältnisses i zwischen dem Kurbeltrieb 62 und dem Antriebsrad 61,
- Ermitteln 104 eines Eingriffsverhältnisses K in Abhängigkeit der Drehzahl N_{R} des Antriebsrads 61, der Drehzahl N_{K} des Kurbeltriebs 62 und dem Übersetzungsverhältnis i,
- Ermitteln 105 eines Soll-Antriebsdrehmoments M_{Soll} in Abhängigkeit des Eingriffsverhältnisses K,
- Bereitstellen 106 eines Steuersignals S, wobei das Steuersignal dazu ausgebildet ist, einen Antrieb 51 des Antriebssystems dazu zu veranlassen, das Soll-Antriebsdrehmoment M_{Soll} bereitzustellen,
- Detektieren 107 einer Änderung des Eingriffsverhältnisses K als einen ersten Sprung S1 des Eingriffsverhältnisses K, insbesondere durch die Steuereinheit,
- Korrigieren 108 des Eingriffsverhältnisses K zu einem korrigierten Eingriffsverhältnis K* und Ermitteln des Soll-Antriebsdrehmoments in Abhängigkeit des korrigierten Eingriffsverhältnisses K* in Reaktion auf eine Detektion des ersten Sprungs S1 des Eingriffsverhältnisses K.

Das Verfahren 100 umfasst ferner Folgendes:
- Detektieren 109 einer Änderung des Eingriffsverhältnisses K als einen zweiten, insbesondere dem ersten Sprung S₁ entgegengesetzten, Sprung S₂ des Eingriffsverhältnisses K
- Beenden 110 des Korrigierens 180 des Eingriffsverhältnisses K in Reaktion auf eine Detektion des zweiten Sprungs S₂ des Eingriffsverhältnisses K und Bestimmen 150 des Soll-Antriebsdrehmoments in Abhängigkeit des Eingriffsverhältnisses K.

Ferner umfasst das Verfahren 100 Folgendes:
- Aktualisieren 111 des Übersetzungsverhältnisses i in Reaktion auf eine Detektion des ersten Sprungs des Eingriffsverhältnisses K, insbesondere durch die Erfassungseinheit 53, wobei insbesondere das Korrigieren 170 des Eingriffsverhältnisses K beendet wird, wenn das Übersetzungsverhältnis i aktualisiert wurde.

Fig. 2 zeigt einen schematischen Verlauf des Eingriffsverhältnisses K bzw. des korrigierten Eingriffsverhältnisses K* über der Zeit. Dargestellt ist ferner ein erster Sprung S₁ des Eingriffsverhältnisses K, ab welchem eine Korrektur des Eingriffsverhältnisses K zu einem korrigierten Eingriffsverhältnis K* erfolgt. Die Korrektur des Eingriffsverhältnisses K wird mit der Detektion eines zweiten Sprungs S₂ beendet.

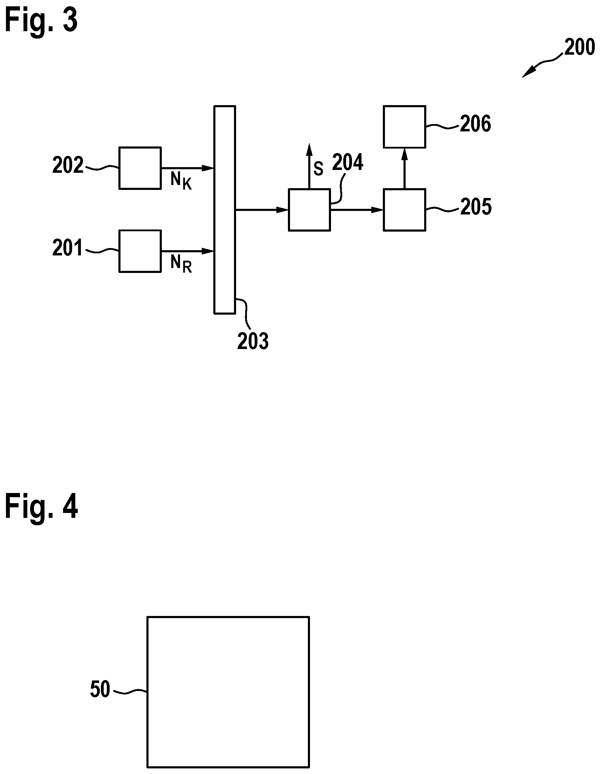

Fig. 3 zeigt ferner eine schematische Ansicht eines Verfahrens 200 zum Betrieb eines Antriebssystems 55 eines pedalgetriebenen Fahrzeugs 60, insbesondere E-Bikes, das Antriebssystem 55 umfassend einen Antrieb 51 zur Bereitstellung eines Antriebsdrehmoments zum Vortrieb des pedalgetriebenen Fahrzeugs 60, das Verfahren 200 umfassend:
- Ermitteln 201 einer Drehzahl N_{R} eines Antriebsrads 61 des pedalgetriebenen Fahrzeugs 60,
- Ermitteln 202 einer Drehzahl N_{K} eines Kurbeltriebs 62 des pedalgetriebenen Fahrzeugs 60,
- Detektieren 203 eines fehlenden Eingriffs zwischen dem Kurbeltrieb 62 und dem Antriebsrad 61 in Abhängigkeit der Drehzahl N_{K} des Kurbeltriebs 62 und der Drehzahl N_{R} des Antriebsrads 61,
- Bereitstellen 204 eines Steuersignals S zur Anpassung, insbesondere zur Reduktion, eines durch einen Antrieb 51 des Antriebssystems 55 bereitgestellten Antriebsdrehmoments in Reaktion auf eine Detektion des fehlenden Eingriffs.

Ferner umfasst das Verfahren 200 Folgendes:
- Detektieren 205 eines bestehenden Eingriffs zwischen dem Kurbeltrieb 62 und dem Antriebsrad 61 in Abhängigkeit der Drehzahl N_{K} des Kurbeltriebs 62 und der Drehzahl N_{R} des Antriebsrads 61,
- Beenden 206 des Bereitstellens 204 des Steuersignals S zur Anpassung, insbesondere Reduktion, des durch den Antrieb 51 des Antriebssystems 55 bereitgestellten Antriebsdrehmoments.

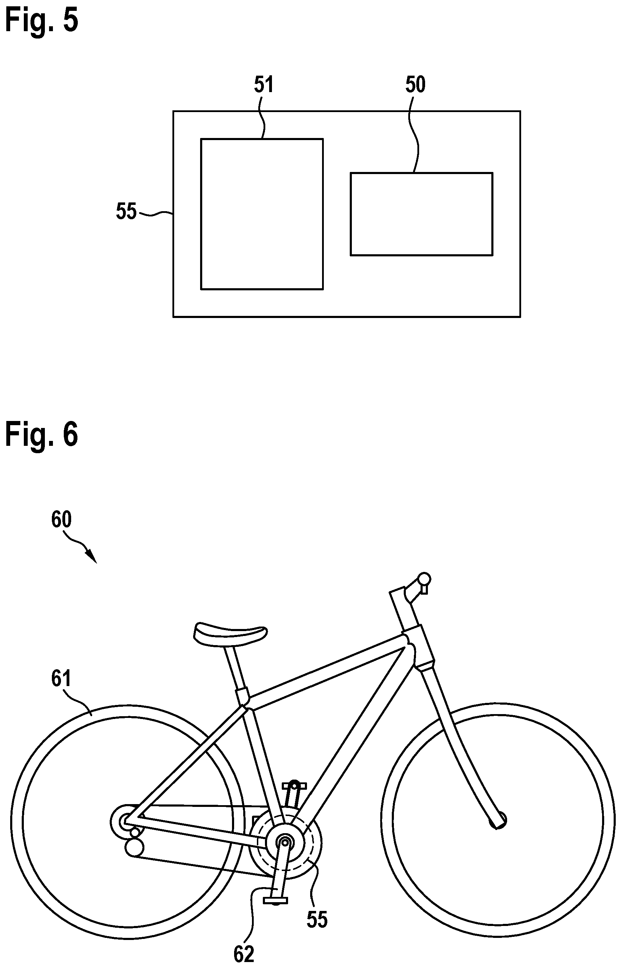

Fig. 6 zeigt ferner eine schematische Ansicht einer Steuereinheit 50 für ein Antriebssystem 55 eines pedalgetriebenen Fahrzeugs 60, wobei insbesondere die Steuereinheit 50dazu ausgebildet ist das Antriebssystem 55 gemäß einem Verfahren 100, 200 gemäß dem ersten und/oder zweiten Aspekt der vorliegenden Erfindung zu betreiben bzw. dazu ausgebildet ist ein Verfahren 100, 200 gemäß dem ersten und/oder Aspekt der vorliegenden Erfindung auszuführen.

Fig. 5 zeigt ferner eine schematische Ansicht eines Antriebssystems 55 für ein pedalgetriebenes Fahrzeug 60, umfassend einen Antrieb 51 zur Bereitstellung eines Antriebsdrehmoments zum Vortrieb des pedalgetriebenen Fahrzeugs 60, wobei das Antriebssystem 55 dazu ausgebildet ist, gemäß einem Verfahren 100, 200 gemäß dem ersten und/oder zweiten Aspekt der vorliegenden Erfindung betrieben zu werden. Ferner umfasst das Antriebssystem 55 eine Steuereinheit 50.

Fig. 6 zeigt ferner ein pedalgetriebenes Fahrzeug 60, umfassend ein Antriebssystem 55 gemäß dem dritten Aspekt der vorliegenden Erfindung. Vorliegend ist der Antrieb 51 des Antriebssystems 55 als ein Mittelmotor ausgebildet, kann jedoch besonders bevorzugt auch als ein Nabenantrieb, insbesondere zum Antrieb des Antriebsrads 61 des pedalgetriebenen Fahrzeugs 60, ausgebildet sein.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Betrieb eines Antriebssystems (50) eines pedalgetriebenen Fahrzeugs (60), umfassend:
- Ermitteln (101) einer Drehzahl (N_{R}) eines Antriebsrads (61) des pedalgetriebenen Fahrzeugs (60),
- Ermitteln (102) einer Drehzahl (N_{K}) eines Kurbeltriebs (62) des pedalgetriebenen Fahrzeugs (60),
- Ermitteln (103) eines Übersetzungsverhältnisses (i) zwischen dem Kurbeltrieb (62) und dem Antriebsrad (61),
- Ermitteln (104) eines Eingriffsverhältnisses (K) in Abhängigkeit der Drehzahl (N_{R}) des Antriebsrads (61), der Drehzahl (N_{K}) des Kurbeltriebs (62) und dem Übersetzungsverhältnis (i),
- Ermitteln (105) eines Soll-Antriebsdrehmoments (M_{Soll}) in Abhängigkeit des Eingriffsverhältnisses (K),
- Bereitstellen (106) eines Steuersignals (S), wobei das Steuersignal (S) dazu ausgebildet ist, einen Antrieb (51) des Antriebssystems dazu zu veranlassen, das Soll-Antriebsdrehmoment (M_{Soll}) bereitzustellen,
- Detektieren (107) einer Änderung des Eingriffsverhältnisses (K) als einen ersten Sprung (S₁) des Eingriffsverhältnisses (K), insbesondere durch die Steuereinheit,
- Korrigieren (108) des Eingriffsverhältnisses (K) zu einem korrigierten Eingriffsverhältnis (K*) und Ermitteln des Soll-Antriebsdrehmoments in Abhängigkeit des korrigierten Eingriffsverhältnisses (K*) in Reaktion auf eine Detektion des ersten Sprungs (S₁) des Eingriffsverhältnisses (K).

2. Verfahren (100) nach Anspruch 1,
**dadurch gekennzeichnet,**
**dass** das Korrigieren (108) des Eingriffsverhältnisses (K) zu dem korrigierten Eingriffsverhältnis (K*) derart erfolgt, dass ein in Abhängigkeit des korrigierten Eingriffsverhältnisses (K*) bestimmtes Soll-Antriebsdrehmoment größer ist als ein in Abhängigkeit des Eingriffsverhältnisses (K) bestimmtes Soll-Antriebsdrehmoment.

3. Verfahren (100) nach einem der vorhergehenden Ansprüche,
**dadurch gekennzeichnet,**
**dass** das Korrigieren (108) des Eingriffsverhältnisses (K) zu dem korrigierten Eingriffsverhältnis (K*) Folgendes umfasst:
- Ermitteln eines ersten Eingriffsverhältniswerts (K₁) wobei der erste Eingriffsverhältniswert (K₁) charakteristisch ist für eine quantitative Ausprägung des Eingriffsverhältnisses (K) vor dem ersten Sprung (S₁) des Eingriffsverhältnisses (K) und
- Ermitteln eines zweiten Eingriffsverhältniswerts (K₂), wobei der zweite Eingriffsverhältniswert (K₂) charakteristisch ist für eine quantitative Ausprägung des Eingriffsverhältnisses (K) nach dem ersten Sprung (S₁) des Eingriffsverhältnisses (K),
- Ermitteln eines Korrekturfaktors (F) in Abhängigkeit des ersten Eingriffsverhältniswerts (K₁) und des zweiten Eingriffsverhältniswerts (K₂), insbesondere als Quotient des ersten Eingriffsverhältniswerts (K₁) und des zweiten Eingriffsverhältniswerts (K₂),
- Bestimmen des korrigierten Eingriffsverhältnisses (K*) als Produkt aus dem Eingriffsverhältnis (K) und dem Korrekturfaktor (F).

4. Verfahren (100) nach einem der vorhergehenden Ansprüche,
**dadurch gekennzeichnet**,
das Korrigieren (108) des Eingriffsverhältnisses (K) zu dem korrigierten Eingriffsverhältnis (K*) Folgendes umfasst:
- Begrenzen des korrigierten Eingriffsverhältnisses (K*) auf einen Eingriffsverhältnisgrenzwert und/oder Begrenzen des Korrekturfaktors (F) auf einen Korrekturfaktorgrenzwert.

5. Verfahren (100) nach einem der vorhergehenden Ansprüche,
**dadurch gekennzeichnet**,
das ferner umfasst ist:
- Detektieren (109) einer Änderung des Eingriffsverhältnisses (K) als einen zweiten, insbesondere dem ersten Sprung (S₁) entgegengesetzten, Sprung (S₂) des Eingriffsverhältnisses (K),
- Beenden (110) des Korrigierens (108) des Eingriffsverhältnisses (K) in Reaktion auf eine Detektion des zweiten Sprungs (S₂) des Eingriffsverhältnisses (K) und Bestimmen (150) des Soll-Antriebsdrehmoments in Abhängigkeit des Eingriffsverhältnisses (K).

6. Verfahren (100) nach einem der vorhergehenden Ansprüche,
**dadurch gekennzeichnet,**
**dass** eine Änderung des Eingriffsverhältnisses (K) als, insbesondere erster oder zweiter, Sprung (S₁, S₂) detektiert wird, wenn
- eine Änderungsrate des Eingriffsverhältnisses (K) einen vorgegebenen Grenzwert erreicht oder überschreitet,
- eine Differenz zwischen einem ungefilterten und einem gefilterten, insbesondere tiefpassgefilterten, Verlaufs des Eingriffsverhältnisses (K) über der Zeit (t) an wenigstens einem gegebenen Zeitpunkt einen vorgegebenen Grenzwert erreicht oder überschreitet,
- ein vorgegebenes Muster (M) für einen Verlauf des Eingriffsverhältnisses (K) in einem Verlauf des Eingriffsverhältnisses (K) über der Zeit (t) erkannt wird und/oder
- ein Betrag der Änderung des Eingriffsverhältnisses (K) innerhalb eines vorgegebenen Zeitraums wenigstens einen vorgegebenen Grenzwert erreicht oder überschreitet und/oder
- das Eingriffsverhältnis (K) nach der Änderung innerhalb eines vorgegebenen Wertebereichs liegt.

7. Verfahren (100) nach einem der vorhergehenden Ansprüche,
**dadurch gekennzeichnet,**
**dass** zumindest das Korrigieren (108) des Eingriffsverhältnisses (K) nur dann erfolgt, wenn
- vor dem Detektieren (107) des ersten Sprungs das Eingriffsverhältnis (K) für eine vorgegebene Zeitdauer innerhalb eines vorgegebenen Wertebereichs lag und/oder
- der Betrag der Änderung des Eingriffsverhältnisses (K) bei dem ersten Sprung einen vorgegebenen Grenzwert erreicht oder überschreitet.

8. Verfahren (100) nach einem der vorhergehenden Ansprüche,
**dadurch gekennzeichnet,**
**dass** das Korrigieren (108) des Eingriffsverhältnisses (K) beendet wird, wenn
- nach dem Detektieren (107) des ersten Sprungs des Eingriffsverhältnisses (K) das Eingriffsverhältnis (K) für eine vorgegebene Zeitdauer innerhalb wenigstens eines vorgegebenen Wertebereichs liegt.

9. Verfahren (100) nach einem der vorhergehenden Ansprüche,
**dadurch gekennzeichnet,**
**dass** ferner umfasst ist:
- Aktualisieren (111) des Übersetzungsverhältnisses (i) in Reaktion auf eine Detektion des ersten Sprungs des Eingriffsverhältnisses (K), insbesondere durch die Erfassungseinheit (53), wobei insbesondere das Korrigieren (170) des Eingriffsverhältnisses (K) beendet wird, wenn das Übersetzungsverhältnis (i) aktualisiert wurde.

10. Verfahren (100) nach Anspruch 9,
**dadurch gekennzeichnet,**
**dass** das Aktualisieren (111) des Übersetzungsverhältnisses (i) Folgendes umfasst:
- Ermitteln eines temporären Übersetzungsverhältnisses (i*) in Abhängigkeit der Drehzahl (N_{R}) des Antriebsrads (61) und der Drehzahl (N_{K}) des Kurbeltriebs (62),
- Festlegen des temporären Übersetzungsverhältnisses (i*) als neues Übersetzungsverhältnis (i), wenn eine Änderungsrate des temporären Übersetzungsverhältnisses (i*) für einen vorgegebenen Zeitraum einen vorgegebenen Grenzwert erreicht oder unterschreitet und/oder wenn eine Differenz zwischen einem ungefilterten und einem gefilterten, insbesondere tiefpassgefilterten, Verlaufs des temporären Übersetzungsverhältnisses (i*) über der Zeit (t) an wenigstens einem gegebenen Zeitpunkt einen vorgegebenen Grenzwert erreicht oder unterschreitet.

11. Verfahren (200) zum Betrieb eines Antriebssystems (55) eines pedalgetriebenen Fahrzeugs (60), umfassend:
- Ermitteln (201) einer Drehzahl (N_{R}) eines Antriebsrads (61) des pedalgetriebenen Fahrzeugs (60),
- Ermitteln (202) einer Drehzahl (N_{K}) eines Kurbeltriebs (62) des pedalgetriebenen Fahrzeugs (60),
- Detektieren (203) eines fehlenden Eingriffs zwischen dem Kurbeltrieb (62) und dem Antriebsrad (61) in Abhängigkeit der Drehzahl (N_{K}) des Kurbeltriebs (62) und der Drehzahl (N_{R}) des Antriebsrads (61),
- Bereitstellen (204) eines Steuersignals (S) zur Anpassung, insbesondere zur Reduktion, eines durch einen Antrieb (51) des Antriebssystems (55) bereitgestellten Antriebsdrehmoments in Reaktion auf eine Detektion des fehlenden Eingriffs.

12. Verfahren (100) nach dem vorhergehenden Anspruch,
**dadurch gekennzeichnet,**
**dass** das Detektieren (204) des fehlenden Eingriffs Folgendes umfasst:
- Ermitteln eines temporären Übersetzungsverhältnisses (i*) in Abhängigkeit der Drehzahl (N_{R}) des Antriebsrads (61) und der Drehzahl (N_{K}) des Kurbeltriebs (62),
wobei ein fehlender Eingriff zwischen dem Kurbeltrieb (62) und dem Antriebsrad (61) detektiert wird, wenn
- eine Änderungsrate des temporären Übersetzungsverhältnis (i*) einen vorgegebenen Grenzwert für eine vorgegebene Zeitdauer erreicht oder überschreitet und/oder
- eine Differenz zwischen einem ungefilterten und einem gefilterten, insbesondere tiefpassgefilterten, Verlaufs des temporären Übersetzungsverhältnisses (i*) über der Zeit (t) an wenigstens einem gegebenen Zeitpunkt einen vorgegebenen Grenzwert erreicht oder unterschreitet.

13. Verfahren (100) nach einem der Ansprüche 11 oder 12,
**dadurch gekennzeichnet,**
**dass** ferner umfasst ist:
- Detektieren (205) eines bestehenden Eingriffs zwischen dem Kurbeltrieb (62) und dem Antriebsrad (61) in Abhängigkeit der Drehzahl (N_{K}) des Kurbeltriebs (62) und der Drehzahl (N_{R}) des Antriebsrads (61),
- Beenden (206) des Bereitstellens (204) des Steuersignals (S) zur Anpassung, insbesondere Reduktion, des durch den Antrieb (51) des Antriebssystems (55) bereitgestellten Antriebsdrehmoments.

14. Verfahren (100) nach Anspruch 13,
**dadurch gekennzeichnet,**
**dass** das Detektieren (205) des bestehenden Eingriffs Folgendes umfasst:
- Ermitteln eines temporären Übersetzungsverhältnisses (i*) in Abhängigkeit der Drehzahl (N_{R}) des Antriebsrads (61) und der Drehzahl (N_{K}) des Kurbeltriebs (62),
wobei ein bestehender Eingriff zwischen dem Kurbeltrieb (62) und dem Antriebsrad (61) detektiert wird, wenn
- eine Änderungsrate des temporären Übersetzungsverhältnis (i*) einen vorgegebenen Grenzwert für eine vorgegebene Zeitdauer erreicht oder unterschreitet und/oder
- eine Differenz zwischen einem ungefilterten und einem gefilterten, insbesondere tiefpassgefilterten, Verlaufs des temporären Übersetzungsverhältnisses (i*) über der Zeit (t) an wenigstens einem gegebenen Zeitpunkt einen vorgegebenen Grenzwert erreicht oder unterschreitet.

15. Steuereinheit (50) für ein Antriebssystem (55) eines pedalgetriebenen Fahrzeugs (60), wobei die Steuereinheit (50) dazu ausgebildet ist, ein Verfahren (100, 200) gemäß einem der vorhergehenden Ansprüche auszuführen.

16. Antriebssystem (55) für ein pedalgetriebenes Fahrzeug (60), umfassend einen Antrieb (51) zur Bereitstellung eines Antriebsdrehmoments zum Vortrieb des pedalgetriebenen Fahrzeugs (60) sowie eine Steuereinheit (50) nach dem vorhergehenden Anspruch.

17. Pedalgetriebenes Fahrzeug (60), umfassend ein Antriebssystem (55) gemäß dem vorhergehenden Anspruch.
